# EUROPEAN PATENT APPLICATION

(11) **EP 4 333 369 A1**
(43) Date of publication of application: **06.03.2024**
(21) Application number: 22204899.3
(22) Date of filing: 01.11.2022
(51) Int. Cl.: H04L 9/40

(54) **STATELESS TRANSPORT LAYER SECURITY PROXY SESSION RESUMPTION**

(30) Priority: 30.08.2022 US 202217823382
(71) Applicant: Juniper Networks, Inc., Sunnyvale, CA 94089 (US)
(72) Inventor: N, Shiva Kumar, Sunnyvale, 94089 (US); BASIREDDYGARI, Jayanth Eswar Reddy, Sunnyvale, 94089 (US); SHARMA, Rakesh Kumar, Sunnyvale, 94089 (US)
(74) Representative: D Young & Co LLP

(57) **Abstract**

A system communicates, with a client device, to establish a first TLS communication session between the system and the client device, and with a server device, to establish a second TLS communication session between the system and the server device. The system generates a first session ticket associated with the first TLS communication session, and obtains, from the server device, a second session ticket associated with the second TLS communication session. The system sends, to the client device and via the first TLS communication session, the first session ticket, with the second session ticket included in the first session ticket. The system receives, from the client device and after the first TLS communication session and the second TLS communication session terminate, the first session ticket that includes the second session ticket, which the system uses to facilitate resumption of the first TLS communication session and the second TLS communication session.

## Description

### BACKGROUND

A cryptographic protocol, such as transport layer security (TLS) protocol, may be used to securely transmit data over a computer network. The cryptographic protocol may be an application-level protocol that provides encryption technology for transmitted data. For example, TLS may utilize certificates and private-public key exchange pairs to enable the secure transmission of data between a client device and a server device.

### SUMMARY

Particular aspects are set out in the appended independent claims. Various optional embodiments are set out in the dependent claims.

Some implementations described herein relate to a system. The system may include one or more memories and one or more processors. The system may be configured to receive, from a client device, a request to communicate with a server device. The system may be configured to communicate, with the client device and based on the request, to establish a first transport layer security (TLS) communication session between the system and the client device. The system may be configured to communicate, with the server device and based on the request, to establish a second TLS communication session between the system and the server device. The system may be configured to generate, based on establishment of the first TLS communication session, a first session ticket associated with the first TLS communication session. The system may be configured to obtain, from the server device and via the second TLS communication session, a second session ticket associated with the second TLS communication session. The system may be configured to update the first session ticket to include the second session ticket. The system may be configured to send, to the client device and via the first TLS communication session, the first session ticket that includes the second session ticket.

Some implementations described herein relate to a computer-readable medium comprising a set of instructions for a system. The set of instructions, when executed by one or more processors of the system, may cause the system to communicate, with a client device, to establish a first TLS communication session between the system and the client device. The set of instructions, when executed by one or more processors of the system, may cause the system to communicate, with a server device, to establish a second TLS communication session between the system and the server device. The set of instructions, when executed by one or more processors of the system, may cause the system to generate, based on establishment of the first TLS communication session, a first session ticket associated with the first TLS communication session. The set of instructions, when executed by one or more processors of the system, may cause the system to obtain, from the server device and via the second TLS communication session, a second session ticket associated with the second TLS communication session. The set of instructions, when executed by one or more processors of the system, may cause the system to send, to the client device and via the first TLS communication session, the first session ticket, with the second session ticket included in the first session ticket.

Some implementations described herein relate to a method. The method may include receiving, by a system and from a client device, a first session ticket, with a second session ticket included in the first session ticket, where the first session ticket is associated with a first TLS communication session between the system and the client device that was established and then terminated, and where the second session ticket is associated with a second TLS communication session between the system and a server device that was established and then terminated. The method may include causing, by the system and based on the first session ticket, the first TLS communication session to be resumed. The method may include sending, by the system, to the server device, and based on causing the first TLS communication session to be resumed, the second session ticket, where sending the second session ticket permits the server device to cause the second TLS communication session to be resumed.

### BRIEF DESCRIPTION OF THE DRAWINGS

Figs. 1A-1F are diagrams of one or more example implementations described herein.
Fig. 2 is a diagram of an example environment in which systems and/or methods described herein may be implemented.
Fig. 3 is a diagram of example components of a device associated with a stateless transport layer security (TLS) proxy system.
Fig. 4 is a diagram of example components of a device associated with a stateless TLS proxy system.
Figs. 5-6 are flowcharts of example processes associated with stateless TLS proxy session resumption.

### DETAILED DESCRIPTION

The following detailed description of example implementations refers to the accompanying drawings. The same reference numbers in different drawings may identify the same or similar elements.

A transport layer security (TLS) proxy device typically sits between a client device and a server device (e.g., as a "middle" device between the client device and the server device). Rather than a client device directly connecting to a server device, such as via a TLS connection, the client device and the TLS proxy device establish a first TLS connection session and the TLS proxy device and the server device establish a second TLS connection session. Accordingly, any traffic communicated between the client device and the server device transmits via the TLS proxy device using the first TLS communication session and the second TLS communication session. This permits the TLS proxy device to intercept and analyze the traffic (e.g., for security threats). In some cases, in association with establishment of the first TLS communication session, the TLS proxy device sends, to the client device, a first session ticket (often referred to as a "proxy-server" session ticket) that can be used to facilitate resumption of the first TLS communication session if and/or when the first TLS communication session terminates. Moreover, in some cases, in association with establishment of the second TLS communication session, the server device sends, to the TLS proxy device, a second session ticket (often referred to as a "real-server" session ticket) that can be used to facilitate resumption of the second TLS communication session if and/or when the second TLS communication session terminates. In this way, the first TLS communication session and the second TLS communication session can be resumed without going through a resource-intensive TLS handshake process to establish new TLS communication sessions.

However, storing the second session ticket on the TLS proxy device causes the TLS proxy system to use computing resources (e.g., processing resources, memory resources, communication resources, and/or power resources, among other examples). Further, in many cases, a performance of the TLS proxy device can be impacted to perform lookups for second session tickets, such as when hundreds, thousands, or more, TLS communication sessions need to be resumed by the TLS proxy device in a short period of time. Further, when the TLS proxy device fails, its state information (e.g., its collection of stored second session tickets) cannot be retrieved by another TLS proxy device to resume TLS connections while the TLS proxy device is down. Consequently, the other TLS proxy device, and one or more server devices, use additional computing resources to establish new TLS communication sessions.

Some implementations described herein provide a TLS proxy system that provides stateless TLS proxy session resumption. The TLS proxy system communicates, with a client device, to establish a first TLS communication session between the TLS proxy system and the client device, and communicates, with a server device, to establish a second TLS communication session between the TLS proxy system and the server device. The TLS proxy system generates a first session ticket (e.g., proxy-server session ticket) associated with the first TLS communication session, and obtains, from the server device, a second session ticket (e.g., a real-server session ticket) associated with the second TLS communication session. The TLS proxy system sends, to the client device and via the first TLS communication session, the first session ticket and the second session ticket. For example, the TLS proxy system may include the second session ticket in the first session ticket (e.g., embed the second session ticket in the first session ticket) and may send the first session ticket to the client device via the first TLS communication session. This permits the client device to store the first session ticket and the second session ticket (e.g., store the first session ticket with the second session ticket included in the first session ticket), and, accordingly, the TLS proxy system does not need to store the second session ticket.

In this way, the TLS proxy system is stateless (e.g., with respect to the first TLS communication session and the second TLS communication session). For example, the TLS proxy system does not store any information related to the first TLS communication session and the second TLS communication session (e.g., does not store the first session ticket and does not store the second session ticket). This conserves computing resources (e.g., processing resources, memory resources, communication resources, and/or power resources, among other examples) of the TLS proxy system that would otherwise need to be utilized to store information related to the first TLS communication session and/or the second TLS communication session. This, in turn, improves a performance of the TLS proxy system (e.g., by allowing the computing resources to be used for other purposes).

In some implementations, the TLS proxy system receives, from the client device and after each of the first TLS communication session and the second TLS communication session terminate, the first session ticket and the second session ticket. For example, the client device may send the first session ticket, which includes the second session ticket (e.g., the second session ticket is embedded in the first session ticket), to the TLS. The TLS proxy system therefore uses the first session ticket and the second session ticket (e.g., after extracting the second session ticket from the first session ticket) to facilitate resumption of the first TLS communication session and the second TLS communication session, which enables the TLS proxy system to provide stateless TLS proxy session resumption. In this way, the client device, the TLS proxy system, and the server device do not need to communicate (e.g., as part of one or more full TLS handshake operations) to establish new TLS connection sessions (e.g., new, unresumed TLS connection sessions). This conserves computing resources of the client device, the TLS proxy system, and the server device, that would otherwise need to be utilized to establish new TLS communication sessions.

Moreover, due to the stateless natures of the TLS proxy system, any computing component of the TLS proxy system (e.g., when it's a cloud-based system that includes multiple computing components) can be used to facilitate resumption of a TLS connection, not just the one that facilitated initiation of the TLS communication session. This is not possible for a stateful TLS proxy device. Accordingly, the TLS proxy system provides a seamless TLS communication session resumption performance for the client device and the server device, because any available computing component of the TLS proxy system can resume TLS communication sessions.

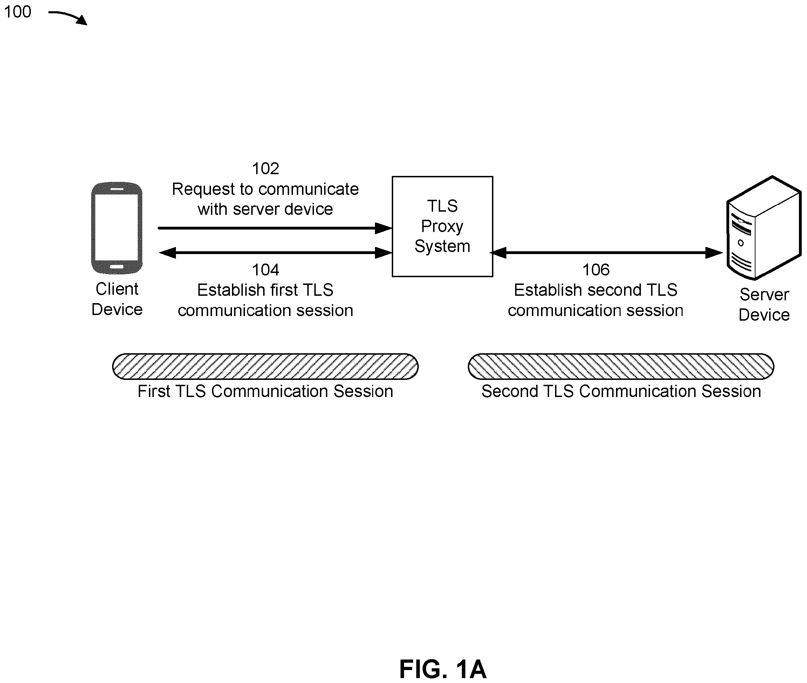

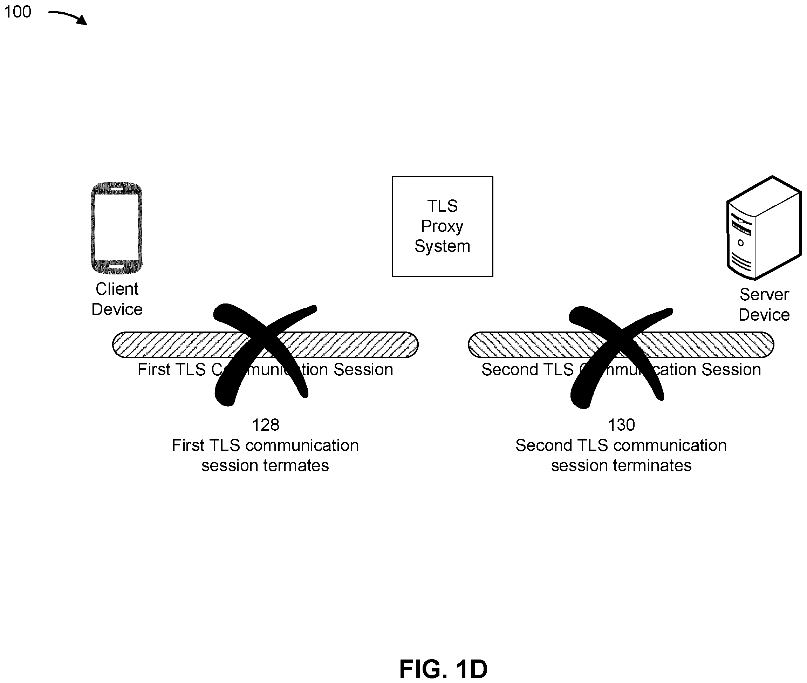

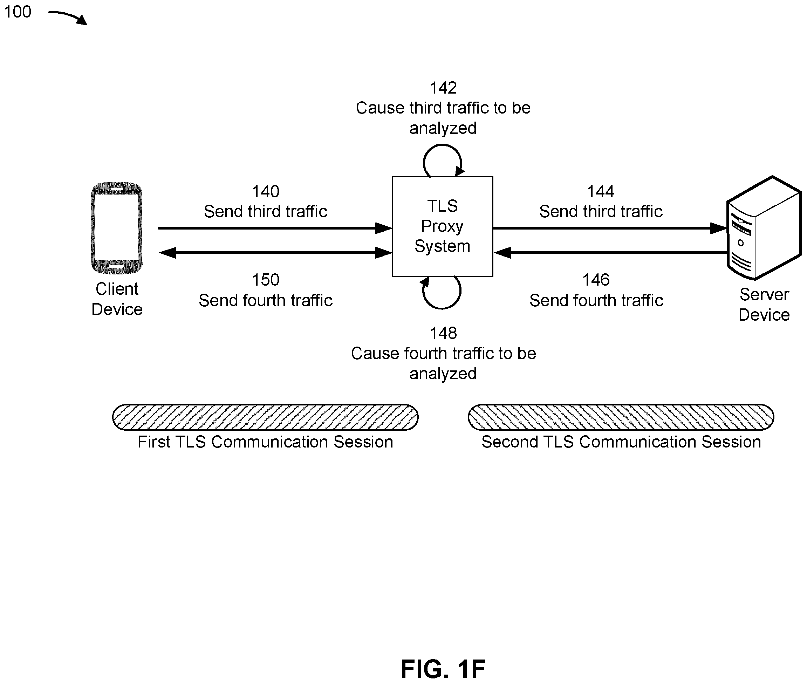

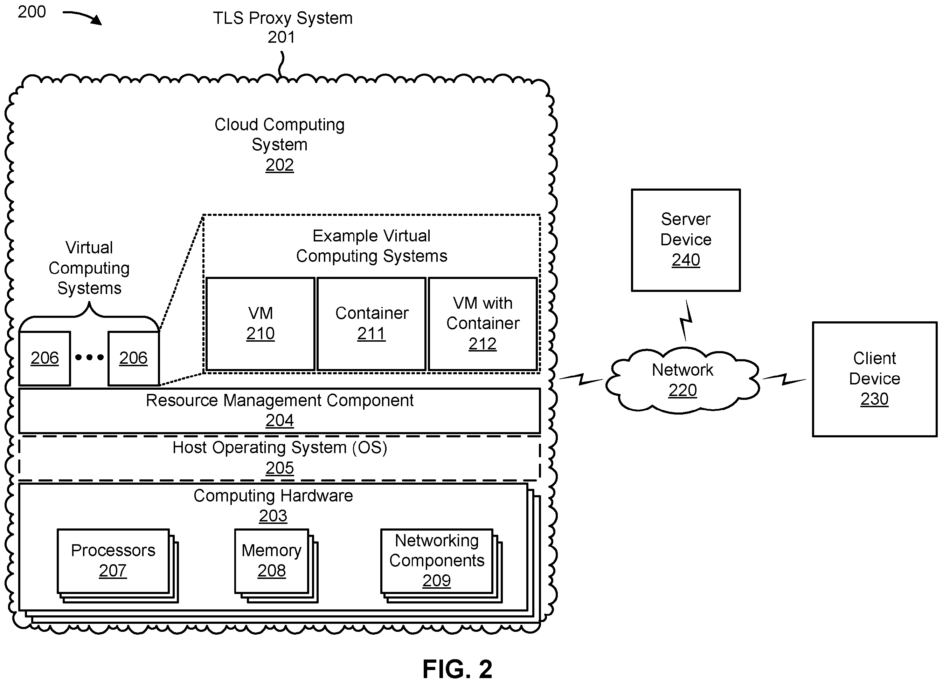

Figs. 1A-1F are diagrams of one or more example implementations 100 described herein. As shown in FIGS. 1A-1F, example implementation(s) 100 may include a client device, a TLS proxy system, and a server device. The client device, the TLS proxy system, and the server device, are described in more detail below in connection with Figs. 2-4.

As shown in Fig. 1A, and by reference number 102, the client device may send, to the TLS proxy system, a request to communicate with the server device. For example, the client device may initiate a first transmission control protocol (TCP) handshake operation with the TLS proxy system as part of a request to communicate with the server device. Accordingly, the client device and the TLS proxy system may communicate (e.g., as part of the first TCP handshake operation) to establish a first TCP communication session between the client device the and the TLS proxy system, and the TLS proxy system may initiate a second TCP handshake operation with the server device to cause the TLS proxy system and the server device to communicate (e.g., as part of the second TCP handshake operation) to establish a second TCP communication session between the TLS proxy system and the server device.

In some implementations, the request (e.g., that the TLS proxy system received from the client device) may include an indication that the client device desires to securely communicate with the server device, such as via one or more TLS communication sessions. Accordingly, as shown by reference number 104, the TLS proxy system (e.g., based on the request) may communicate with the client device (e.g., as part of a first TLS handshake operation) to establish a first TLS communication session between the TLS proxy system and the client device. Additionally, as shown by reference number 106, the TLS proxy system (e.g., based on the request) may communicate with the server device (e.g., as part of a second TLS handshake operation) to establish a second TLS communication session between the TLS proxy system and the client device.

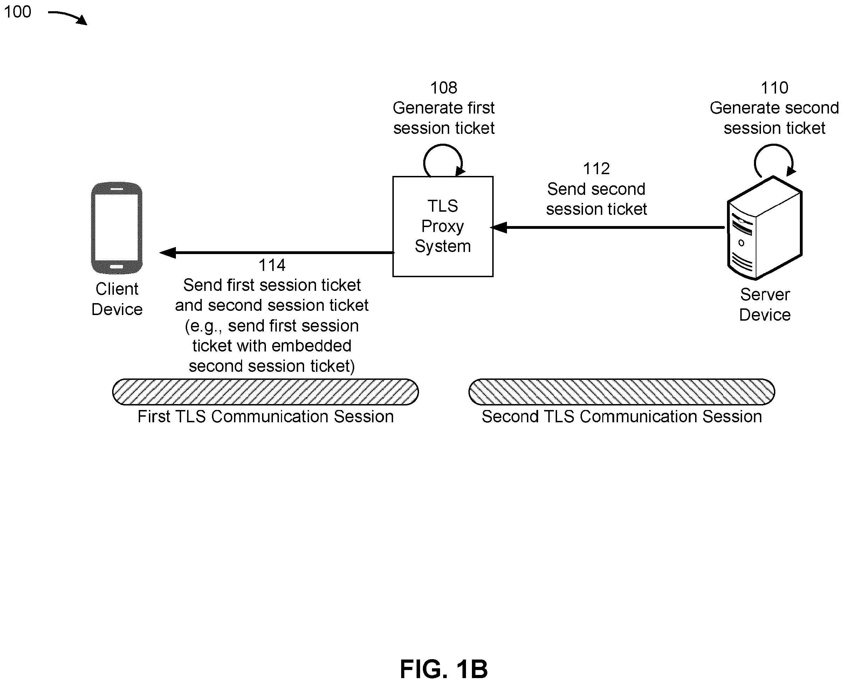

As shown in Fig. 1B, and by reference number 108, the TLS proxy system (e.g., based on establishment of the first TLS communication session) may generate a first session ticket associated with the first TLS communication session (e.g., a proxy-server ticket). The first session ticket may include information that can be used to facilitate resumption of the first TLS communication session upon termination of the first TLS communication session. The first TLS communication may terminate, for example, due to a TLS timeout termination (described in more detail herein). Accordingly, the first session ticket may include, for example, encrypted information that is encrypted by the TLS proxy system using one or more encryption keys that are accessible to the TLS proxy system (and not to the client device). The encrypted information may indicate that the first session ticket is associated with the first TLS communication session, the TLS proxy system, the client device, and/or other information. In some implementations, the TLS proxy system may generate the first session ticket as part of establishment of the first TLS communication session (e.g., as part of the first TLS handshake operation).

As shown by reference number 110, the server device (e.g., based on establishment of the second TLS communication session) may generate a second session ticket associated with the second TLS communication session (e.g., a real-server ticket). The second session ticket may include information that can be used to facilitate resumption of the second TLS communication session upon termination of the second TLS communication session. The first TLS communication may terminate, for example, due to a TLS timeout termination (e.g., described in more detail herein). Accordingly, the second session ticket may include, for example, encrypted information that is encrypted by the server device using one or more encryption keys that are accessible to the server device (and not to the TLS proxy system and not to the client device). The encrypted information may indicate that the second session ticket is associated with the second TLS communication session, the TLS proxy system, the server device, and/or other information. In some implementations, the server device may generate the second session ticket as part of establishment of the second TLS communication session (e.g., as part of the second TLS handshake operation).

As shown by reference number 112, the TLS proxy system may obtain the second session ticket from the server device. For example, the server device may send (e.g., automatically send) the second session ticket upon the server device generating the second session ticket. In another example, the TLS proxy system may request the second session ticket, and the server device may send the second session ticket to the TLS proxy system in response to the request.

As shown by reference number 114, the TLS proxy system may send the first session ticket and the second session ticket to the client device. For example, the TLS proxy system may include the first session ticket and the second session ticket in one or more messages that the TLS proxy system sends to the client device via the first TLS communication session. In some implementations, the TLS proxy system may include the second session ticket in the first session ticket, and may send the first session ticket to the client device (e.g., via the first TLS communication session). For example, the TLS proxy system may update the first session ticket to include the second session ticket (e.g., by embedding the second session ticket in the first session ticket), and may send (e.g., based on updating the first session ticket) the first session ticket to the client device. In this way, from the point of view of the TLS proxy system and the client device, it appears that only one session ticket (e.g., the first session ticket, also referred to as the proxy-server ticket) is sent to the client device, even though the one session ticket also includes another session ticket (e.g., the second session ticket, also referred to as the real-server ticket) included (e.g., embedded) in the one session ticket.

In this way, the client device may obtain the first session ticket and the second session ticket, which permits the client device to save the first session ticket and the second session ticket. For example, the client device may store the first session ticket and the second session ticket in a data structure (e.g., a database, a file structure, an electronic file, and/or another data structure) associated with the client device (e.g., that is included in the client device and/or accessible by the client device). As another example, when the second session ticket is included (e.g., embedded) in the first session ticket, the client device may store the first session ticket in the data structure (and therefore the second session ticket is also stored in the data structure as part of the fist session ticket). Moreover, in this way, the TLS proxy system may be stateless (e.g., with respect to the first TLS communication session and the second TLS communication session). For example, the TLS proxy system may not store any information related to the first TLS communication session and the second TLS communication session (e.g., may not store the first session ticket and/or may not store the second session ticket). This conserves computing resources (e.g., processing resources, memory resources, communication resources, and/or power resources, among other examples) of the TLS proxy system that would otherwise need to be utilized to store information related to the first TLS communication session and the second TLS communication session.

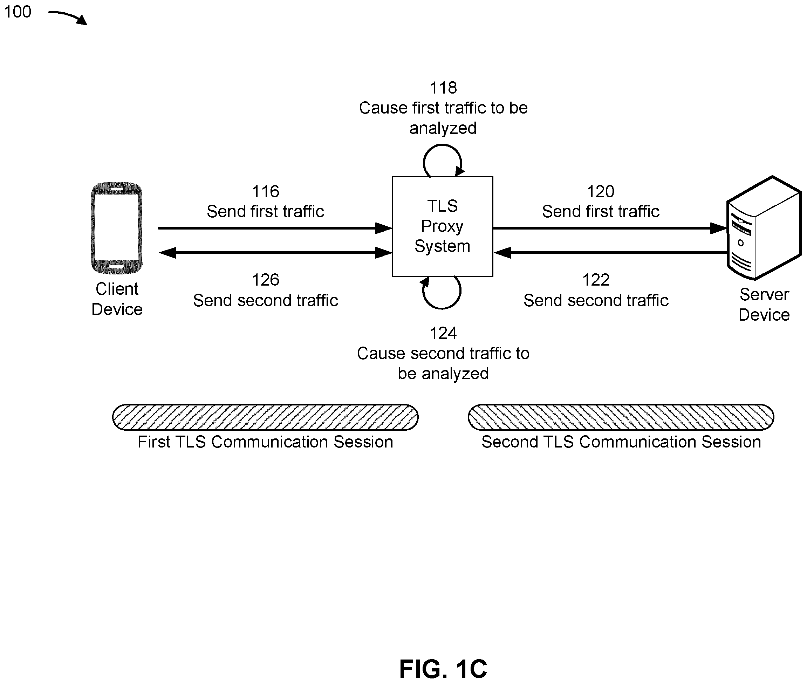

In some implementations, the TLS proxy system facilitating establishment of the first TLS communication session, facilitating establishment of the second TLS, and/or sending the first session ticket and/or the second session ticket to the client device, may permit the client device and the server device to communicate (e.g., with each other). For example, the client device and the server device may communicate, via the TLS proxy system, using the first TLS communication session and the second TLS communication session, such as in a manner shown in Fig. 1C.

As shown in Fig. 1C, and by reference number 116, the client device may send first traffic that is destined for the server device to the TLS proxy system (e.g., after the TLS proxy system sent, and the client device received, the first session ticket and the second session ticket). For example, the client device may send the first traffic via the first TLS communication session. Accordingly, the TLS proxy system may receive, via the first TLS communication session, the first traffic.

As shown by reference number 118, the TLS proxy system may cause the first traffic to be analyzed (e.g., using one or more threat detection techniques). For example, the TLS proxy system may use the one or more threat detection techniques (e.g., that may include using uniform resource locator (URL) reputation scanning techniques, blocklisting techniques, anti-virus scanning techniques, anti-malware techniques, and/or other techniques) to analyze the first traffic, or the TLS proxy system may send the first traffic to another device or service to cause the first traffic to be analyzed using the one or more threat detection techniques. When the TLS proxy system determines that no threat exists with the first traffic, or that a threat level (e.g., a threat score) associated with the first traffic is less than a threat level threshold, the TLS proxy system may determine that the first traffic is to be sent to the server device (e.g., as described herein in relation to reference number 120). Alternatively, the TLS proxy system may drop the first traffic and/or otherwise prevent the first traffic from being sent to the server device.

As shown by reference number 120, the TLS proxy system may send the first traffic to the server device (e.g., based on causing the first traffic to be analyzed). For example, the TLS proxy system may send the first traffic via the second TLS communication session. Accordingly, the server device may receive, via the second TLS communication session, the first traffic.

As further shown in Fig. 1C, and by reference number 122, the server device may send second traffic that is destined for the client device to the TLS proxy system (e.g., after the TLS proxy system sent, and the server device received, the first traffic). For example, the server device may send the second traffic via the second TLS communication session. Accordingly, the TLS proxy system may receive, via the second TLS communication session, the second traffic.

As shown by reference number 124, the TLS proxy system may cause the second traffic to be analyzed (e.g., using the one or more threat detection techniques described elsewhere herein). For example, the TLS proxy system may use the one or more threat detection techniques to analyze the second traffic, or the TLS proxy system may send the second traffic to another device or service to cause the second traffic to be analyzed using the one or more threat detection techniques. When the TLS proxy system determines that no threat exists with the second traffic, or that a threat level (e.g., a threat score) associated with the second traffic is less than a threat level threshold, the TLS proxy system may determine that the second traffic is to be sent to the client device (e.g., as described herein in relation to reference number 126). Alternatively, the TLS proxy system may drop the second traffic and/or otherwise prevent the second traffic from being sent to the client device.

As shown by reference number 126, the TLS proxy system may send the second traffic to the client device (e.g., based on causing the second traffic to be analyzed). For example, the TLS proxy system may send the second traffic via the first TLS communication session. Accordingly, the client device may receive, via the first TLS communication session, the second traffic.

As shown in Fig. ID, and by reference number 128, the first TLS communication session may terminate. For example, the first TLS communication session may terminate due to a lack of communication between the client device and the TLS proxy system via the first TLS communication session over a period of time, wherein the period of time is less than or equal to 5 seconds, 10 seconds, 30 seconds, 1 minute, 5 minutes, and/or 10 minutes, among other examples. This is sometimes referred to as a TLS timeout termination. Additionally, or alternatively, as shown by reference number 130, the second TLS communication session may terminate. For example, the second TLS communication session may terminate due to a lack of communication between the server device and the TLS proxy system via the second TLS communication session over a same, or different period of time (e.g., the second TLS communication session may terminate due to a TLS timeout termination). The first TLS communication session and/or the second TLS communication session may terminate for one or more other reasons, such as to due to an operational error of the client device, the TLS proxy system, and/or the server device.

In some implementations, after at least one of the first TLS communication session and the second TLS communication session terminate, the client device may send another request to communicate with the server device. For example, the client device may initiate another first TCP handshake operation with the TLS proxy system as part of a request to communicate with the server device. Accordingly, the client device and the TLS proxy system may communicate (e.g., as part of the other first TCP handshake operation) to establish another first TCP communication session between the client device the and the TLS proxy system, and the TLS proxy system may initiate another second TCP handshake operation with the server device to cause the TLS proxy system and the server device to communicate (e.g., as part of the other second TCP handshake operation) to establish another second TCP communication session between the TLS proxy system and the server device.

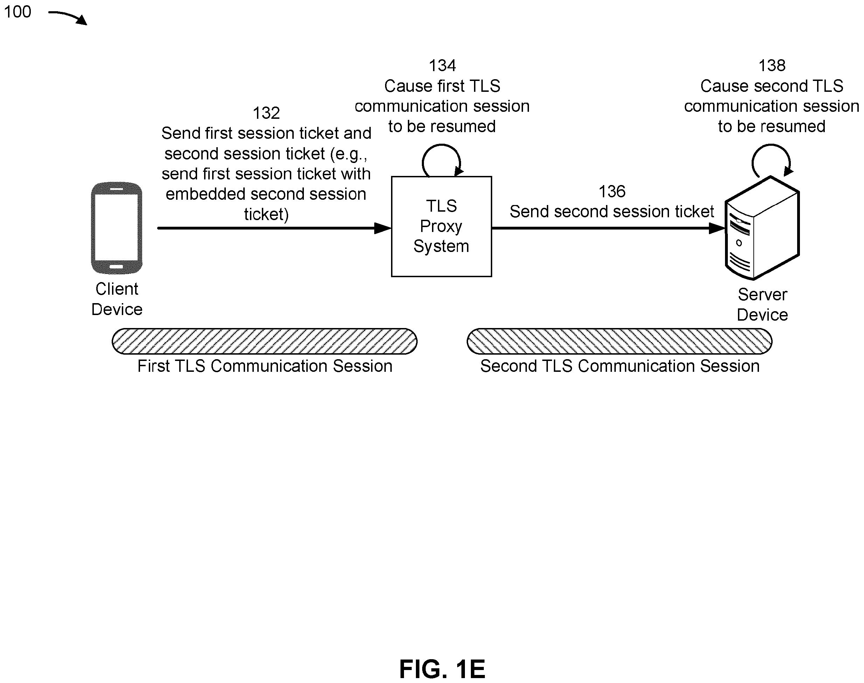

In some implementations, the other request (e.g., that the TLS proxy system received from the client device) may include an indication that client device desires to securely communicate with the server device (again), such as via one or more TLS communication sessions. Accordingly, the TLS proxy system, the client device, and the server device may communicate as described herein in relation to Fig. 1E to resume one or more TLS communications.

Accordingly, as shown in Fig. IE, and by reference number 132, the client device may send the first session ticket and the second session ticket to the TLS proxy system. For example, the client device may obtain the first session ticket and the second session ticket from the data structure that stored the first session ticket and the second session ticket, and may include the first session ticket and the second session ticket in one or more messages that the client device sends to the TLS proxy system via the first TLS communication session.

In some implementations, the second session ticket may be included in the first session ticket (e.g., the second session ticket may be embedded in the first session ticket), and the client device may send the first session ticket to the TLS proxy system. In this way, from the point of view of the TLS proxy system and the client device, it appears that only one session ticket (e.g., the first session ticket, also referred to as the proxy-server ticket) is sent to the TLS proxy system, even though the one session ticket also includes another session ticket (e.g., the second session ticket, also referred to as the real-server ticket) included (e.g., embedded) in the one session ticket. Accordingly, in some implementations, the second session ticket may be included in the first session ticket when the TLS proxy system receives the first session ticket and the second session ticket from the client device. The TLS proxy system may process the first session ticket to parse (e.g., remove and/or extract) the second session ticket from the first session ticket.

As shown by reference number 134, the TLS proxy system may cause the first TLS communication session to be resumed (e.g., based on the first session ticket). For example, the TLS proxy system may authenticate (e.g., using one or more authentication techniques) the first session ticket, and may cause, based on authenticating the first session ticket, the first TLS communication session to be resumed. To authenticate the first session ticket, the TLS proxy system may decrypt (e.g., using the one or more encryption keys that are accessible to the TLS proxy system) and verify the encrypted information included in the first session ticket. The TLS proxy system may cause the first TLS communication session to be resumed based on the encrypted info (e.g., that the TLS proxy system decrypted). In this way, the TLS proxy system provides stateless TLS proxy session resumption. Accordingly, the client device and the TLS proxy system do not need to communicate (e.g., as part of TLS handshake operation) to establish a new TLS connection session between the client device and the TLS proxy system. This conserves computing resources (e.g., processing resources, memory resources, communication resources, and/or power resources, among other examples), of the client device and the TLS proxy system, that would otherwise need to be utilized to establish a new TLS communication session.

As shown by reference number 136, the TLS proxy system may send the second session ticket to the server device (e.g., based on causing the first TLS communication session to be resumed). For example, the TLS proxy system may send (e.g., automatically send) the second session ticket upon the TLS proxy system determining that the first TLS communication session has resumed. As another example, the TLS proxy system may send the second session ticket upon the TLS proxy system receiving the second session ticket, or upon the TLS proxy system parsing the second session ticket from the first session ticket. Sending the second session ticket may permit the server device cause the second TLS communication session to be resumed (e.g., as described herein in relation to reference number 138).

As shown by reference number 138, the server device may cause the second TLS communication session to be resumed (e.g., based on the second session ticket). For example, the server device may authenticate (e.g., using one or more authentication techniques) the second session ticket, and may cause, based on authenticating the second session ticket, the second TLS communication session to be resumed. To authenticate the second session ticket, the server device may decrypt (e.g., using the one or more encryption keys that are accessible to the server device) and verify the encrypted information included in the second session ticket. The server device may cause the second TLS communication session to be resumed based on the encrypted information (e.g., that the server device decrypted). In this way, the TLS proxy system provides stateless TLS proxy session resumption. Accordingly, the server device and the TLS proxy system do not need to communicate (e.g., as part of TLS handshake operation) to establish a new TLS connection session between the server device and the TLS proxy system. This conserves computing resources (e.g., processing resources, memory resources, communication resources, and/or power resources, among other examples), of the server device and the TLS proxy system, that would otherwise need to be utilized to establish a new TLS communication session.

In some implementations, the TLS proxy system facilitating resumption of the first TLS communication session and/or facilitating resumption of the second TLS may permit the client device and the server device to communicate (e.g., with each other). For example, the client device may communicate, via the TLS proxy system, using the first TLS communication session and the second TLS communication session, such as in a manner shown in Fig. IF.

As shown in Fig. IF, and by reference number 140, the client device may send third traffic that is destined for the server device to the TLS proxy system (e.g., after the TLS proxy system sent, and the server device received, the second session ticket). For example, the client device may send the third traffic via the first TLS communication session. Accordingly, the TLS proxy system may receive, via the first TLS communication session, the third traffic.

As shown by reference number 142, the TLS proxy system may cause the third traffic to be analyzed (e.g., using one or more threat detection techniques described elsewhere herein). For example, the TLS proxy system may use the one or more threat detection techniques to analyze the third traffic, or the TLS proxy system may send the third traffic to another device or service to cause the third traffic to be analyzed using the one or more threat detection techniques. When the TLS proxy system determines that no threat exists with the third traffic, or that a threat level (e.g., a threat score) associated with the third traffic is less than a threat level threshold, the TLS proxy system may determine that the third traffic is to be sent to the server device (e.g., as described herein in relation to reference number 144). Alternatively, the TLS proxy system may drop the third traffic and/or otherwise prevent the third traffic from being sent to the server device.

As shown by reference number 144, the TLS proxy system may send the third traffic to the server device (e.g., based on causing the third traffic to be analyzed). For example, the TLS proxy system may send the third traffic via the second TLS communication session. Accordingly, the server device may receive, via the second TLS communication session, the third traffic.

As further shown in Fig. IF, and by reference number 146, the server device may send fourth traffic that is destined for the client device to the TLS proxy system (e.g., after the TLS proxy system sent, and the server device received, the third traffic). For example, the server device may send the fourth traffic via the second TLS communication session. Accordingly, the TLS proxy system may receive, via the second TLS communication session, the fourth traffic.

As shown by reference number 148, the TLS proxy system may cause the fourth traffic to be analyzed (e.g., using the one or more threat detection techniques described elsewhere herein). For example, the TLS proxy system may use the one or more threat detection techniques to analyze the fourth traffic, or the TLS proxy system may send the fourth traffic to another device or service to cause the fourth traffic to be analyzed using the one or more threat detection techniques. When the TLS proxy system determines that no threat exists with the fourth traffic, or that a threat level (e.g., a threat score) associated with the fourth traffic is less than a threat level threshold, the TLS proxy system may determine that the fourth traffic is to be sent to the client device (e.g., as described herein in relation to reference number 150). Alternatively, the TLS proxy system may drop the fourth traffic and/or otherwise prevent the fourth traffic from being sent to the client device.

As shown by reference number 150, the TLS proxy system may send the fourth traffic to the client device (e.g., based on causing the fourth traffic to be analyzed). For example, the TLS proxy system may send the fourth traffic via the first TLS communication session. Accordingly, the client device may receive, via the first TLS communication session, the fourth traffic.

While example implementations described herein in relation to Figs. 1A-1F are directed to the TLS proxy system facilitating establishment of, and resumption of, TLS communication sessions between a single client device and a single server device, other example implementations include the TLS proxy system facilitating establishment of, and resumption of, TLS communication sessions between multiple client device and one or more server devices (e.g., in a same, or similar, manner as that described herein in relation to Figs. 1A-1F). In these other example implementations, the TLS proxy system may be stateless (e.g., with respect to any TLS communication session). For example, the TLS proxy system may not store any information related to any TLS communication session associated with the TLS proxy system (e.g., may not store session tickets associated with the TLS communication sessions). This conserves computing resources (e.g., processing resources, memory resources, communication resources, and/or power resources, among other examples) of the TLS proxy system that would otherwise need to be utilized to store information related to the TLS communication sessions.

As indicated above, FIGS. 1A-1F are provided merely as one or more examples. Other examples may differ from what is described with regard to FIGS. 1A-1F. The number and arrangement of devices shown in FIGS. 1A-1F are provided as one or more examples. In practice, there may be additional devices, fewer devices, different devices, or differently arranged devices than those shown in FIGS. 1A-1F. Furthermore, two or more devices shown in FIGS. 1A-1F may be implemented within a single device, or a single device shown in FIGS. 1A-1F may be implemented as multiple, distributed devices. Additionally, or alternatively, a set of devices (e.g., one or more devices) of FIGS. 1A-1F may perform one or more functions described as being performed by another set of devices of FIGS. 1A-1F.

Fig. 2 is a diagram of an example environment 200 in which systems and/or methods described herein may be implemented. As shown in Fig. 2, environment 200 may include a TLS proxy system 201, which may include one or more elements of and/or may execute within a cloud computing system 202. The cloud computing system 202 may include one or more elements 203-212, as described in more detail below. As further shown in Fig. 2, environment 200 may include a network 220, a client device 230, and/or a server device 240. Devices and/or elements of environment 200 may interconnect via wired connections and/or wireless connections.

The cloud computing system 202 includes computing hardware 203, a resource management component 204, a host operating system (OS) 205, and/or one or more virtual computing systems 206. The cloud computing system 202 may execute on, for example, an Amazon Web Services platform, a Microsoft Azure platform, or a Snowflake platform. The resource management component 204 may perform virtualization (e.g., abstraction) of computing hardware 203 to create the one or more virtual computing systems 206. Using virtualization, the resource management component 204 enables a single computing device (e.g., a computer or a server) to operate like multiple computing devices, such as by creating multiple isolated virtual computing systems 206 from computing hardware 203 of the single computing device. In this way, computing hardware 203 can operate more efficiently, with lower power consumption, higher reliability, higher availability, higher utilization, greater flexibility, and lower cost than using separate computing devices.

Computing hardware 203 includes hardware and corresponding resources from one or more computing devices. For example, computing hardware 203 may include hardware from a single computing device (e.g., a single server) or from multiple computing devices (e.g., multiple servers), such as multiple computing devices in one or more data centers. As shown, computing hardware 203 may include one or more processors 207, one or more memories 208, and/or one or more networking components 209. Examples of a processor, a memory, and a networking component (e.g., a communication component) are described elsewhere herein.

The resource management component 204 includes a virtualization application (e.g., executing on hardware, such as computing hardware 203) capable of virtualizing computing hardware 203 to start, stop, and/or manage one or more virtual computing systems 206. For example, the resource management component 204 may include a hypervisor (e.g., a bare-metal or Type 1 hypervisor, a hosted or Type 2 hypervisor, or another type of hypervisor) or a virtual machine monitor, such as when the virtual computing systems 206 are virtual machines 210. Additionally, or alternatively, the resource management component 204 may include a container manager, such as when the virtual computing systems 206 are containers 211. In some implementations, the resource management component 204 executes within and/or in coordination with a host operating system 205.

A virtual computing system 206 includes a virtual environment that enables cloud-based execution of operations and/or processes described herein using computing hardware 203. As shown, a virtual computing system 206 may include a virtual machine 210, a container 211, or a hybrid environment 212 that includes a virtual machine and a container, among other examples. A virtual computing system 206 may execute one or more applications using a file system that includes binary files, software libraries, and/or other resources required to execute applications on a guest operating system (e.g., within the virtual computing system 206) or the host operating system 205.

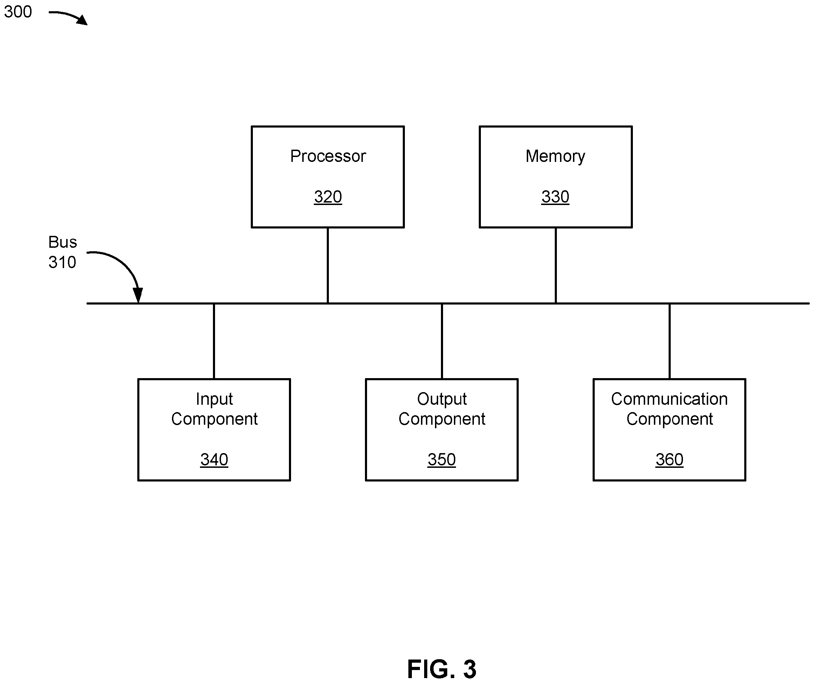

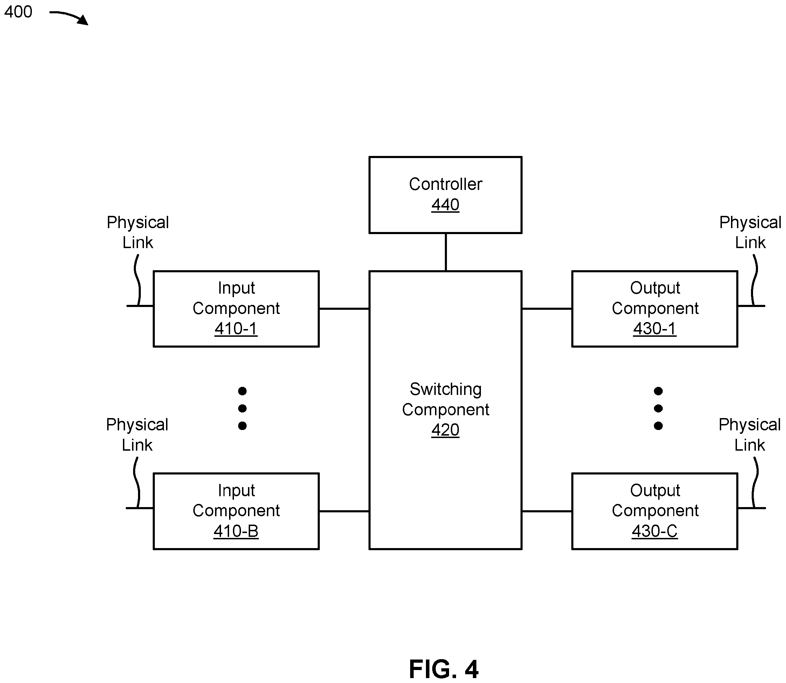

Although the TLS proxy system 201 may include one or more elements 203-212 of the cloud computing system 202, may execute within the cloud computing system 202, and/or may be hosted within the cloud computing system 202, in some implementations, the TLS proxy system 201 may not be cloud-based (e.g., may be implemented outside of a cloud computing system) or may be partially cloud-based. For example, the TLS proxy system 201 may include one or more devices that are not part of the cloud computing system 202, such as device 300 of Fig. 3 and/or a device 400 of Fig. 4, which may include a standalone server or another type of computing device. The TLS proxy system 201 may perform one or more operations and/or processes described in more detail elsewhere herein.

Network 220 includes one or more wired and/or wireless networks. For example, network 220 may include a cellular network, a public land mobile network (PLMN), a local area network (LAN), a wide area network (WAN), a private network, the Internet, and/or a combination of these or other types of networks. The network 220 enables communication among the devices of environment 200.

The client device 230 may include one or more devices capable of receiving, generating, storing, processing, and/or providing information, as described elsewhere herein. The client device 230 may include a communication device and/or a computing device. For example, the client device 230 may include a wireless communication device, a mobile phone, a user equipment, a laptop computer, a tablet computer, a desktop computer, a wearable communication device (e.g., a smart wristwatch, a pair of smart eyeglasses, a head mounted display, or a virtual reality headset), or a similar type of device.

The server device 240 may include one or more devices capable of receiving, generating, storing, processing, providing, and/or routing information, as described elsewhere herein. The server device 240 may include a communication device and/or a computing device. For example, the server device 240 may include a server, such as an application server, a client server, a web server, a database server, a host server, a proxy server, a virtual server (e.g., executing on computing hardware), or a server in a cloud computing system. In some implementations, the server device 240 may include computing hardware used in a cloud computing environment.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of a device 300 associated with a stateless TLS proxy system. Device 300 may correspond to the TLS proxy system 201, the computing hardware 203, the client device 230, and/or the server device 240. In some implementations, the TLS proxy system 201, the computing hardware 203, the client device 230, and/or the server device 240 may include one or more devices 300 and/or one or more components of device 300. As shown in Fig. 3, device 300 may include a bus 310, a processor 320, a memory 330, an input component 340, an output component 350, and a communication component 360.

Bus 310 may include one or more components that enable wired and/or wireless communication among the components of device 300. Bus 310 may couple together two or more components of Fig. 3, such as via operative coupling, communicative coupling, electronic coupling, and/or electric coupling. Processor 320 may include a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 may include one or more processors capable of being programmed to perform one or more operations or processes described elsewhere herein.

Memory 330 may include volatile and/or nonvolatile memory. For example, memory 330 may include random access memory (RAM), read only memory (ROM), a hard disk drive, and/or another type of memory (e.g., a flash memory, a magnetic memory, and/or an optical memory). Memory 330 may include internal memory (e.g., RAM, ROM, or a hard disk drive) and/or removable memory (e.g., removable via a universal serial bus connection). Memory 330 may be a non-transitory computer-readable medium. Memory 330 stores information, instructions, and/or software (e.g., one or more software applications) related to the operation of device 300. In some implementations, memory 330 may include one or more memories that are coupled to one or more processors (e.g., processor 320), such as via bus 310.

Input component 340 enables device 300 to receive input, such as user input and/or sensed input. For example, input component 340 may include a touch screen, a keyboard, a keypad, a mouse, a button, a microphone, a switch, a sensor, a global positioning system sensor, an accelerometer, a gyroscope, and/or an actuator. Output component 350 enables device 300 to provide output, such as via a display, a speaker, and/or a light-emitting diode. Communication component 360 enables device 300 to communicate with other devices via a wired connection and/or a wireless connection. For example, communication component 360 may include a receiver, a transmitter, a transceiver, a modem, a network interface card, and/or an antenna.

Device 300 may perform one or more operations or processes described herein. For example, a computer-readable medium (e.g., memory 330) may provide a set of instructions (e.g., one or more instructions or code) for execution by processor 320. Processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry is used instead of or in combination with the instructions to perform one or more operations or processes described herein. Additionally, or alternatively, processor 320 may be configured to perform one or more operations or processes described herein. Thus, implementations described herein are not limited to any specific combination of hardware circuitry and software.

Such a computer-readable medium may be provided as a storage medium (sometimes termed "non-transitory") and/or as a transmission medium. A storage medium may take the form of a memory (e.g., the memory 330) or any other suitable storage medium, whether designed to be movable between computer systems or installed into a particular computer system. A transmission medium may occur between plural separate computer systems and/or between components of a single computer system, and may take the form of a carrier wave, transmission signal, or the like.

The number and arrangement of components shown in Fig. 3 are provided as an example. Device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

Fig. 4 is a diagram of example components of a device 400 associated with a stateless TLS proxy system. Device 400 may correspond to the TLS proxy system 201, the computing hardware 203, the client device 230, and/or the server device 240. In some implementations, the TLS proxy system 201, the computing hardware 203, the client device 230, and/or the server device 240 may include one or more devices 400 and/or one or more components of device 400. As shown in Fig. 4, device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

Input component 410 may be one or more points of attachment for physical links and may be one or more points of entry for incoming traffic, such as packets. Input component 410 may process incoming traffic, such as by performing data link layer encapsulation or decapsulation. In some implementations, input component 410 may transmit and/or receive packets. In some implementations, input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, device 400 may include one or more input components 410.

Switching component 420 may interconnect input components 410 with output components 430. In some implementations, switching component 420 may be implemented via one or more crossbars, via busses, and/or with shared memories. The shared memories may act as temporary buffers to store packets from input components 410 before the packets are eventually scheduled for delivery to output components 430. In some implementations, switching component 420 may enable input components 410, output components 430, and/or controller 440 to communicate with one another.

Output component 430 may store packets and may schedule packets for transmission on output physical links. Output component 430 may support data link layer encapsulation or decapsulation, and/or a variety of higher-level protocols. In some implementations, output component 430 may transmit packets and/or receive packets. In some implementations, output component 430 may include an output line card that includes one or more packet processing components (e.g., in the form of integrated circuits), such as one or more IFCs, packet forwarding components, line card controller components, output ports, processors, memories, and/or output queues. In some implementations, device 400 may include one or more output components 430. In some implementations, input component 410 and output component 430 may be implemented by the same set of components (e.g., and input/output component may be a combination of input component 410 and output component 430).

Controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, controller 440 may include one or more processors that can be programmed to perform a function.

In some implementations, controller 440 may include a RAM, a ROM, and/or another type of dynamic or static storage device (e.g., a flash memory, a magnetic memory, an optical memory, etc.) that stores information and/or instructions for use by controller 440.

In some implementations, controller 440 may communicate with other devices, networks, and/or systems connected to device 400 to exchange information regarding network topology. Controller 440 may create routing tables based on the network topology information, may create forwarding tables based on the routing tables, and may forward the forwarding tables to input components 410 and/or output components 430. Input components 410 and/or output components 430 may use the forwarding tables to perform route lookups for incoming and/or outgoing packets.

Controller 440 may perform one or more processes described herein. Controller 440 may perform these processes in response to executing software instructions provided by a computer-readable medium. Such a computer-readable medium may be provided as a storage medium (sometimes termed "non-transitory") and/or as a transmission medium. A storage medium may take the form of a memory (such as a memory device) or any other suitable storage medium, whether designed to be movable between computer systems or installed into a particular computer system. A memory device includes memory space within a single physical storage device or memory space spread across multiple physical storage devices. A transmission medium may occur between plural separate computer systems and/or between components of a single computer system, and may take the form of a carrier wave, transmission signal, or the like.

Software instructions may be read into a memory and/or storage component associated with controller 440 from another computer-readable medium or from another device via a communication interface. When executed, software instructions stored in a memory and/or storage component associated with controller 440 may cause controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, device 400 may include additional components, fewer components, different components, or differently arranged components than those shown in Fig. 4. Additionally, or alternatively, a set of components (e.g., one or more components) of device 400 may perform one or more functions described as being performed by another set of components of device 400.

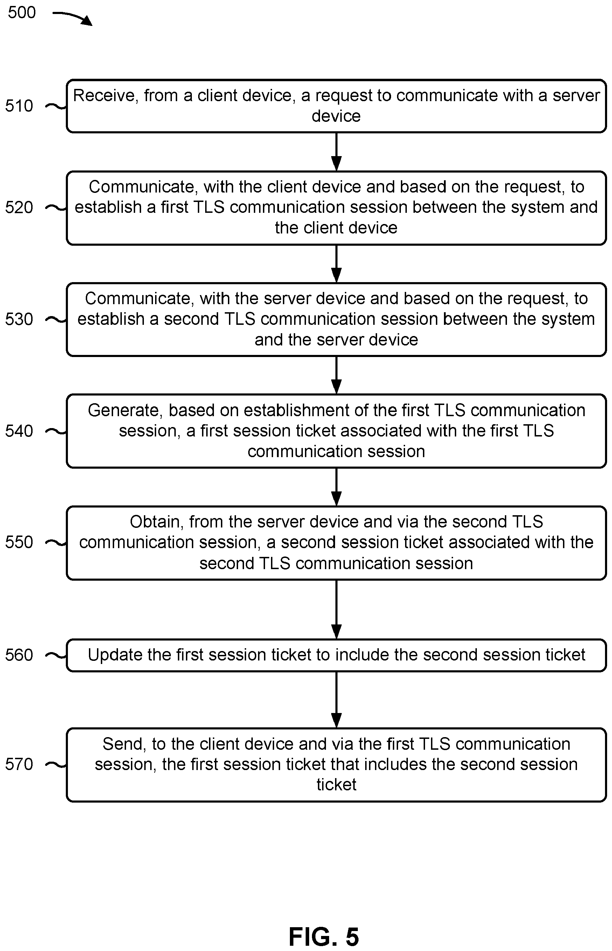

Fig. 5 is a flowchart of an example process 500 associated with stateless TLS proxy session resumption. In some implementations, one or more process blocks of Fig. 5 are performed by a system (e.g., the TLS proxy system 201). In some implementations, one or more process blocks of Fig. 5 are performed by another device or a group of devices separate from or including the system, such as computing hardware (e.g., the computing hardware 203), a client device (e.g., the client device 230), and/or a server device (e.g., the server device 240). Additionally, or alternatively, one or more process blocks of Fig. 5 may be performed by one or more components of device 300, such as processor 320, memory 330, input component 340, output component 350, and/or communication component 360; one or more components of device 400, such as input component 410, switching component 420, output component 430, and/or controller 440; and/or one or more other components.

As shown in Fig. 5, process 500 may include receiving, from a client device, a request to communicate with a server device (block 510). For example, the system may receive, from a client device, a request to communicate with a server device, as described above.

As further shown in Fig. 5, process 500 may include communicating, with the client device and based on the request, to establish a first TLS communication session between the system and the client device (block 520). For example, the system may communicate, with the client device and based on the request, to establish a first TLS communication session between the system and the client device, as described above.

As further shown in Fig. 5, process 500 may include communicating, with the server device and based on the request, to establish a second TLS communication session between the system and the server device (block 530). For example, the system may communicate, with the server device and based on the request, to establish a second TLS communication session between the system and the server device, as described above.

As further shown in Fig. 5, process 500 may include generating, based on establishment of the first TLS communication session, a first session ticket associated with the first TLS communication session (block 540). For example, the system may generate, based on establishment of the first TLS communication session, a first session ticket associated with the first TLS communication session, as described above.

As further shown in Fig. 5, process 500 may include obtaining, from the server device and via the second TLS communication session, a second session ticket associated with the second TLS communication session (block 550). For example, the system may obtain, from the server device and via the second TLS communication session, a second session ticket associated with the second TLS communication session, as described above.

As further shown in Fig. 5, process 500 may include updating the first session ticket to include the second session ticket (block 560). For example, the system may update the first session ticket to include the second session ticket, as described above.

As further shown in Fig. 5, process 500 may include sending, to the client device and via the first TLS communication session, the first session ticket that includes the second session ticket (block 570). For example, the system may send, to the client device and via the first TLS communication session, the first session ticket that includes the second session ticket, as described above. In some implementations, sending the first session ticket that includes the second session ticket permits the client device and the server device to communicate, via the system, using the first TLS communication session and the second TLS communication session.

Process 500 may include additional implementations, such as any single implementation or any combination of implementations described below and/or in connection with one or more other processes described elsewhere herein.

In a first implementation, the first session ticket includes information that can be used to facilitate resumption of the first TLS communication session upon termination of the first TLS communication session, and the second session ticket includes information that can be used to facilitate resumption of the second TLS communication session upon termination of the second TLS communication session.

In a second implementation, alone or in combination with the first implementation, the system is stateless with respect to the first TLS communication session and the second TLS communication session.

In a third implementation, alone or in combination with one or more of the first and second implementations, to update the first session ticket to include the second session ticket includes embedding the session ticket in the first session ticket.

In a fourth implementation, alone or in combination with one or more of the first through third implementations, process 500 includes receiving, from the client device, via the first TLS communication session, and after sending the first session ticket, first traffic destined for the server device; causing the first traffic to be analyzed using one or more threat detection techniques; sending, to the server device, via the second TLS communication session, and based on causing the first traffic to be analyzed, the first traffic; receiving, from the server device, via the second TLS communication session, and based on sending the first traffic, second traffic destined for the client device; causing the second traffic to be analyzed using the one or more threat detection techniques; and sending, to the client device, via the first TLS communication session, and based on causing the second traffic to be analyzed, the second traffic.

In a fifth implementation, alone or in combination with one or more of the first through fourth implementations, after sending the first session ticket and the second session ticket, each of the first TLS communication session and the second TLS communication session terminate and process 500 includes receiving, from the client device, the first session ticket that includes the second session ticket; causing, based on the first session ticket, the first TLS communication session to be resumed; and sending, to the server device and based on causing the first TLS communication session to be resumed, the second session ticket, wherein sending the second session ticket permits the server device to cause the second TLS communication session to be resumed.

In a sixth implementation, alone or in combination with one or more of the first through fifth implementations, the second session ticket is embedded in the first session ticket when the system receives the first session ticket.

In a seventh implementation, alone or in combination with one or more of the first through sixth implementations, causing the first TLS communication session to be resumed includes authenticating the first session ticket, and causing, based authenticating on the first session ticket, the first TLS communication session to be resumed.

In an eighth implementation, alone or in combination with one or more of the first through seventh implementations, process 500 includes receiving, from the client device, via the first TLS communication session, and after sending the second session ticket to the server device, first traffic destined for the server device; causing the first traffic to be analyzed using one or more threat detection techniques; sending, to the server device, via the second TLS communication session, and based on causing the first traffic to be analyzed, the first traffic; receiving, from the server device, via the second TLS communication session, and based on sending the first traffic, second traffic destined for the client device; causing the second traffic to be analyzed using the one or more threat detection techniques; and sending, to the server device, via the first TLS communication session, and based on causing the second traffic to be analyzed, the second traffic.

In a ninth implementation, alone or in combination with one or more of the first through eighth implementations, sending the first session ticket permits the client device to store the first session ticket, with the second session ticket included in the first session ticket, in a data structure associated with the client device.

Although Fig. 5 shows example blocks of process 500, in some implementations, process 500 includes additional blocks, fewer blocks, different blocks, or differently arranged blocks than those depicted in Fig. 5. Additionally, or alternatively, two or more of the blocks of process 500 may be performed in parallel.

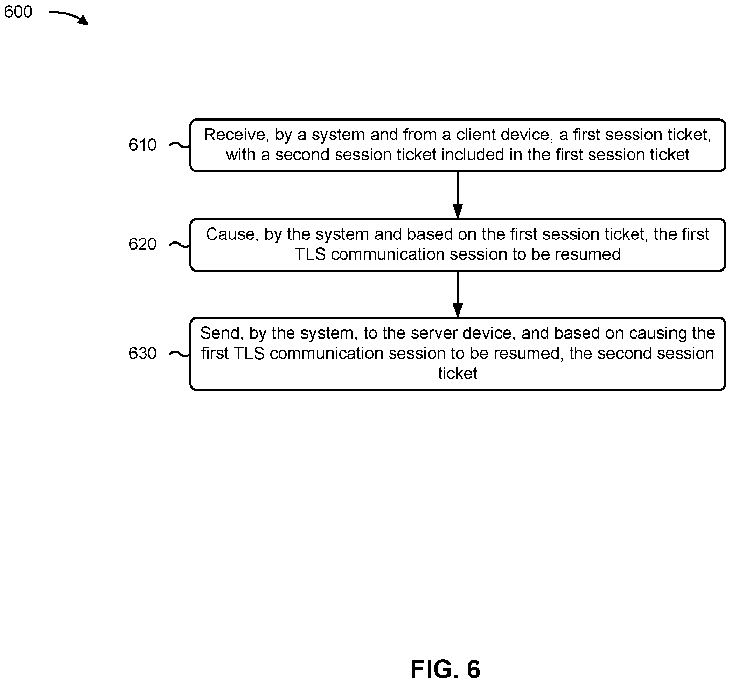

Fig. 6 is a flowchart of an example process 600 associated with stateless TLS proxy session resumption. In some implementations, one or more process blocks of Fig. 6 are performed by a system (e.g., the TLS proxy system 201). In some implementations, one or more process blocks of Fig. 6 are performed by another device or a group of devices separate from or including the system, such as computing hardware (e.g., the computing hardware 203), a client device (e.g., the client device 230), and/or a server device (e.g., the server device 240). Additionally, or alternatively, one or more process blocks of Fig. 6 may be performed by one or more components of device 300, such as processor 320, memory 330, input component 340, output component 350, and/or communication component 360; one or more components of device 400, such as input component 410, switching component 420, output component 430, and/or controller 440; and/or one or more other components.

As shown in Fig. 6, process 600 may include receiving, from a client device, a first session ticket, with a second session ticket included in the first session ticket (block 610). For example, the system may receive, from a client device, a first session ticket, with a second session ticket included in the first session ticket, as described above. In some implementations, the first session ticket is associated with a first TLS communication session between the system and the client device that was established and then terminated. In some implementations, the second session ticket is associated with a second TLS communication session between the system and a server device that was established and then terminated.

As further shown in Fig. 6, process 600 may include causing, based on the first session ticket, the first TLS communication session to be resumed (block 620). For example, the system may cause, based on the first session ticket, the first TLS communication session to be resumed, as described above.

As further shown in Fig. 6, process 600 may include sending to the server device, and based on causing the first TLS communication session to be resumed, the second session ticket (block 630). For example, the system may send to the server device, and based on causing the first TLS communication session to be resumed, the second session ticket, as described above. In some implementations, sending the second session ticket permits the server device to cause the second TLS communication session to be resumed.

Process 600 may include additional implementations, such as any single implementation or any combination of implementations described below and/or in connection with one or more other processes described elsewhere herein.

In a first implementation, causing the first TLS communication session to be resumed and sending the second session ticket permits the client device and the server device to communicate, via the system, using the first TLS communication session and the second TLS communication session.

In a second implementation, alone or in combination with the first implementation, process 600 includes sending, to the server device and via the second TLS communication session, first traffic received from the client device via the first TLS communication session, and sending, to the client device and via the first TLS communication session, second traffic received from the server device via the second TLS communication session.

In a third implementation, alone or in combination with one or more of the first and second implementations, process 600 includes communicating, with another client device, to establish a third TLS communication session between the system and the other client device; communicating, with another server device, to establish a fourth TLS communication session between the system and the other server device; generating, based on establishment of the third TLS communication session, a third session ticket associated with the third TLS communication session; obtaining, from the other server device and via the fourth TLS communication session, a fourth session ticket associated with the fourth TLS communication session; and sending, to the other client device and via the third TLS communication session, the third session ticket, with the fourth session ticket included in the third session ticket.

In a fourth implementation, alone or in combination with one or more of the first through third implementations, process 600 includes receiving, from the other client device and after each of the third TLS communication session and the fourth TLS communication session terminate, the third session ticket that includes the fourth session ticket; causing, based on the third session ticket, the third TLS communication session to be resumed; and sending, to the other server device and based on causing the third TLS communication session to be resumed, the fourth session ticket, wherein sending the fourth session ticket permits the server device to cause the fourth TLS communication session to be resumed.

Although Fig. 6 shows example blocks of process 600, in some implementations, process 600 includes additional blocks, fewer blocks, different blocks, or differently arranged blocks than those depicted in Fig. 6. Additionally, or alternatively, two or more of the blocks of process 600 may be performed in parallel.

Therefore, from one perspective, there has been described a system that can communicate, with a client device, to establish a first TLS communication session between the system and the client device, and with a server device, to establish a second TLS communication session between the system and the server device. The system generates a first session ticket associated with the first TLS communication session, and obtains, from the server device, a second session ticket associated with the second TLS communication session. The system sends, to the client device and via the first TLS communication session, the first session ticket, with the second session ticket included in the first session ticket. The system receives, from the client device and after the first TLS communication session and the second TLS communication session terminate, the first session ticket that includes the second session ticket, which the system uses to facilitate resumption of the first TLS communication session and the second TLS communication session.

Further examples are set out in the following numbered clauses:
Clause 1. A system, comprising: one or more memories; and one or more processors to: receive, from a client device, a request to communicate with a server device; communicate, with the client device and based on the request, to establish a first transport layer security (TLS) communication session between the system and the client device; communicate, with the server device and based on the request, to establish a second TLS communication session between the system and the server device; generate, based on establishment of the first TLS communication session, a first session ticket associated with the first TLS communication session; obtain, from the server device and via the second TLS communication session, a second session ticket associated with the second TLS communication session; update the first session ticket to include the second session ticket; and send, to the client device and via the first TLS communication session, the first session ticket that includes the second session ticket, wherein sending the first session ticket that includes the second session ticket permits the client device and the server device to communicate, via the system, using the first TLS communication session and the second TLS communication session.
Clause 2. The system of clause 1, wherein: the first session ticket includes information that can be used to facilitate resumption of the first TLS communication session upon termination of the first TLS communication session; and the second session ticket includes information that can be used to facilitate resumption of the second TLS communication session upon termination of the second TLS communication session.
Clause 3. The system of clause 1 or 2, wherein the system is stateless with respect to the first TLS communication session and the second TLS communication session.
Clause 4. The system of clause 1, 2 or 3, wherein the one or more processors, to update the first session ticket to include the second session ticket, are to: embed the second session ticket in the first session ticket.
Clause 5. The system of any preceding clause, wherein the one or more processors are further to: receive, from the client device, via the first TLS communication session, and after sending the first session ticket, first traffic destined for the server device; cause the first traffic to be analyzed using one or more threat detection techniques; send, to the server device, via the second TLS communication session, and based on causing the first traffic to be analyzed, the first traffic; receive, from the server device, via the second TLS communication session, and based on sending the first traffic, second traffic destined for the client device; cause the second traffic to be analyzed using the one or more threat detection techniques; and send, to the client device, via the first TLS communication session, and based on causing the second traffic to be analyzed, the second traffic.
Clause 6. The system of any preceding clause, wherein, after sending the first session ticket, each of the first TLS communication session and the second TLS communication session terminate, wherein the one or more processors are further to: receive, from the client device, the first session ticket that includes the second session ticket; cause, based on the first session ticket, the first TLS communication session to be resumed; and send, to the server device and based on causing the first TLS communication session to be resumed, the second session ticket, wherein sending the second session ticket permits the server device to cause the second TLS communication session to be resumed.
Clause 7. The system of clause 6, wherein the second session ticket is embedded in the first session ticket when the system receives the first session ticket.
Clause 8. The system of clause 6 or 7, wherein the one or more processors, to cause the first TLS communication session to be resumed, are to: authenticate the first session ticket; and cause, based authenticating on the first session ticket, the first TLS communication session to be resumed.
Clause 9. The system of clause 6, 7 or 8, wherein the one or more processors are further to: receive, from the client device, via the first TLS communication session, and after sending the second session ticket to the server device, first traffic destined for the server device; cause the first traffic to be analyzed using one or more threat detection techniques; send, to the server device, via the second TLS communication session, and based on causing the first traffic to be analyzed, the first traffic; receive, from the server device, via the second TLS communication session, and based on sending the first traffic, second traffic destined for the client device; cause the second traffic to be analyzed using the one or more threat detection techniques; and send, to the server device, via the first TLS communication session, and based on causing the second traffic to be analyzed, the second traffic.
Clause 10. A computer-readable medium comprising a set of instructions, the set of instructions comprising: one or more instructions that, when executed by one or more processors of a system, cause the system to: communicate, with a client device, to establish a first transport layer security (TLS) communication session between the system and the client device; communicate, with a server device, to establish a second TLS communication session between the system and the server device; generate, based on establishment of the first TLS communication session, a first session ticket associated with the first TLS communication session; obtain, from the server device and via the second TLS communication session, a second session ticket associated with the second TLS communication session; and send, to the client device and via the first TLS communication session, the first session ticket, with the second session ticket included in the first session ticket.
Clause 11. The computer-readable medium of clause 10, wherein sending the first session ticket permits the client device to store the first session ticket, with the second session ticket included in the first session ticket, in a data structure associated with the client device.
Clause 12. The computer-readable medium of clause 10 or 11, wherein the one or more instructions, when executed by the one or more processors, further cause the system to: receive, from the client device, via the first TLS communication session, and after sending the first session ticket, first traffic destined for the server device; send, to the server device and via the second TLS communication session, the first traffic; receive, from the server device, via the second TLS communication session, and based on sending the first traffic, second traffic destined for the client device; and send, to the client device and via the first TLS communication session the second traffic.
Clause 13. The computer-readable medium of clause 10, 11 or 12, wherein the one or more instructions, when executed by the one or more processors, further cause the system to: receive, from the client device and after each of the first TLS communication session and the second TLS communication session terminate, the first session ticket, with the second session ticket included in the first session ticket; cause, based on the first session ticket, the first TLS communication session to be resumed; and send, to the server device and based on causing the first TLS communication session to be resumed, the second session ticket.
Clause 14. The computer-readable medium of clause 13, wherein sending the second session ticket permits the server device to cause the second TLS communication session to be resumed.
Clause 15. The computer-readable medium of clause 13 or 14, wherein the one or more instructions, when executed by the one or more processors, further cause the system to: receive, from the client device, via the first TLS communication session, and after sending the second session ticket to the server device, first traffic destined for the server device; send, to the server device and via the second TLS communication session, the first traffic; receive, from the server device, via the second TLS communication session, and based on sending the first traffic, second traffic destined for the client device; and send, to the client device and via the first TLS communication session the second traffic.
Clause 16. A method, comprising: receiving, by a system and from a client device, a first session ticket, with a second session ticket included in the first session ticket, wherein the first session ticket is associated with a first transport layer security (TLS) communication session between the system and the client device that was established and then terminated, and wherein the second session ticket is associated with a second TLS communication session between the system and a server device that was established and then terminated; causing, by the system and based on the first session ticket, the first TLS communication session to be resumed; and sending, by the system, to the server device, and based on causing the first TLS communication session to be resumed, the second session ticket, wherein sending the second session ticket permits the server device to cause the second TLS communication session to be resumed.
Clause 17. The method of clause 16, wherein causing the first TLS communication session to be resumed and sending the second session ticket permits the client device and the server device to communicate, via the system, using the first TLS communication session and the second TLS communication session.
Clause 18. The method of clause 16 or 17, further comprising: sending, to the server device and via the second TLS communication session, first traffic received from the client device via the first TLS communication session; and sending, to the client device and via the first TLS communication session, second traffic received from the server device via the second TLS communication session.
Clause 19. The method of clause 16, 17 or 18, further comprising: communicating, with another client device, to establish a third TLS communication session between the system and the other client device; communicating, with another server device, to establish a fourth TLS communication session between the system and the other server device; generating, based on establishment of the third TLS communication session, a third session ticket associated with the third TLS communication session; obtaining, from the other server device and via the fourth TLS communication session, a fourth session ticket associated with the fourth TLS communication session; and sending, to the other client device and via the third TLS communication session, the third session ticket, with the fourth session ticket included in the third session ticket.
Clause 20. The method of clause 19, further comprising: receiving, from the other client device and after each of the third TLS communication session and the fourth TLS communication session terminate, the third session ticket that includes the fourth session ticket; causing, based on the third session ticket, the third TLS communication session to be resumed; and sending, to the other server device and based on causing the third TLS communication session to be resumed, the fourth session ticket, wherein sending the fourth session ticket permits the server device to cause the fourth TLS communication session to be resumed.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, traffic or content may include a set of packets. A packet may refer to a communication structure for communicating information, such as a protocol data unit (PDU), a service data unit (SDU), a network packet, a datagram, a segment, a message, a block, a frame (e.g., an Ethernet frame), a portion of any of the above, and/or another type of formatted or unformatted unit of data capable of being transmitted via a network.

As used herein, satisfying a threshold may, depending on the context, refer to a value being greater than the threshold, greater than or equal to the threshold, less than the threshold, less than or equal to the threshold, equal to the threshold, not equal to the threshold, or the like.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiple of the same item.
No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A system, comprising:
one or more memories; and
one or more processors to:
receive, from a client device, a request to communicate with a server device;
communicate, with the client device and based on the request, to establish a first transport layer security (TLS) communication session between the system and the client device;
communicate, with the server device and based on the request, to establish a second TLS communication session between the system and the server device;
generate, based on establishment of the first TLS communication session, a first session ticket associated with the first TLS communication session;
obtain, from the server device and via the second TLS communication session, a second session ticket associated with the second TLS communication session;
update the first session ticket to include the second session ticket; and
send, to the client device and via the first TLS communication session, the first session ticket that includes the second session ticket,
wherein sending the first session ticket that includes the second session ticket permits the client device and the server device to communicate, via the system, using the first TLS communication session and the second TLS communication session.

2. The system of claim 1, wherein:
the first session ticket includes information that can be used to facilitate resumption of the first TLS communication session upon termination of the first TLS communication session; and
the second session ticket includes information that can be used to facilitate resumption of the second TLS communication session upon termination of the second TLS communication session.

3. The system of claim 1 or 2, wherein the system is stateless with respect to the first TLS communication session and the second TLS communication session.

4. The system of claim 1, 2 or 3, wherein the one or more processors, to update the first session ticket to include the second session ticket, are to:
embed the second session ticket in the first session ticket.

5. The system of any preceding claim, wherein the one or more processors are further to:
receive, from the client device, via the first TLS communication session, and after sending the first session ticket, first traffic destined for the server device;
cause the first traffic to be analyzed using one or more threat detection techniques;
send, to the server device, via the second TLS communication session, and based on causing the first traffic to be analyzed, the first traffic;
receive, from the server device, via the second TLS communication session, and based on sending the first traffic, second traffic destined for the client device;
cause the second traffic to be analyzed using the one or more threat detection techniques; and
send, to the client device, via the first TLS communication session, and based on causing the second traffic to be analyzed, the second traffic.

6. The system of any preceding claim, wherein, after sending the first session ticket, each of the first TLS communication session and the second TLS communication session terminate,
wherein the one or more processors are further to:
receive, from the client device, the first session ticket that includes the second session ticket;
cause, based on the first session ticket, the first TLS communication session to be resumed; and
send, to the server device and based on causing the first TLS communication session to be resumed, the second session ticket,
wherein sending the second session ticket permits the server device to cause the second TLS communication session to be resumed;
wherein, for example, the second session ticket is embedded in the first session ticket when the system receives the first session ticket, and for example, wherein the one or more processors, to cause the first TLS communication session to be resumed, are to: authenticate the first session ticket; and cause, based authenticating on the first session ticket, the first TLS communication session to be resumed.

7. The system of claim 6, wherein the one or more processors are further to:
receive, from the client device, via the first TLS communication session, and after sending the second session ticket to the server device, first traffic destined for the server device;
cause the first traffic to be analyzed using one or more threat detection techniques;
send, to the server device, via the second TLS communication session, and based on causing the first traffic to be analyzed, the first traffic;
receive, from the server device, via the second TLS communication session, and based on sending the first traffic, second traffic destined for the client device;
cause the second traffic to be analyzed using the one or more threat detection techniques; and
send, to the server device, via the first TLS communication session, and based on causing the second traffic to be analyzed, the second traffic.

8. A computer-readable medium comprising a set of instructions, the set of instructions comprising:
one or more instructions that, when executed by one or more processors of a system, cause the system to:
communicate, with a client device, to establish a first transport layer security (TLS) communication session between the system and the client device;
communicate, with a server device, to establish a second TLS communication session between the system and the server device;
generate, based on establishment of the first TLS communication session, a first session ticket associated with the first TLS communication session;
obtain, from the server device and via the second TLS communication session, a second session ticket associated with the second TLS communication session; and
send, to the client device and via the first TLS communication session, the first session ticket, with the second session ticket included in the first session ticket.

9. The computer-readable medium of claim 8, wherein sending the first session ticket permits the client device to store the first session ticket, with the second session ticket included in the first session ticket, in a data structure associated with the client device.

10. The computer-readable medium of claim 8 or 9, wherein the one or more instructions, when executed by the one or more processors, further cause the system to:
receive, from the client device, via the first TLS communication session, and after sending the first session ticket, first traffic destined for the server device;
send, to the server device and via the second TLS communication session, the first traffic;
receive, from the server device, via the second TLS communication session, and based on sending the first traffic, second traffic destined for the client device; and
send, to the client device and via the first TLS communication session the second traffic.

11. The computer-readable medium of claim 8, 9 or 10, wherein the one or more instructions, when executed by the one or more processors, further cause the system to:
receive, from the client device and after each of the first TLS communication session and the second TLS communication session terminate, the first session ticket, with the second session ticket included in the first session ticket;
cause, based on the first session ticket, the first TLS communication session to be resumed; and
send, to the server device and based on causing the first TLS communication session to be resumed, the second session ticket;
wherein, for example, sending the second session ticket permits the server device to cause the second TLS communication session to be resumed;
wherein, for example, the one or more instructions, when executed by the one or more processors, further cause the system to: receive, from the client device, via the first TLS communication session, and after sending the second session ticket to the server device, first traffic destined for the server device; send, to the server device and via the second TLS communication session, the first traffic; receive, from the server device, via the second TLS communication session, and based on sending the first traffic, second traffic destined for the client device; and send, to the client device and via the first TLS communication session the second traffic.

12. A method, comprising:
receiving, by a system and from a client device, a first session ticket, with a second session ticket included in the first session ticket,
wherein the first session ticket is associated with a first transport layer security (TLS) communication session between the system and the client device that was established and then terminated, and
wherein the second session ticket is associated with a second TLS communication session between the system and a server device that was established and then terminated;
causing, by the system and based on the first session ticket, the first TLS communication session to be resumed; and
sending, by the system, to the server device, and based on causing the first TLS communication session to be resumed, the second session ticket,
wherein sending the second session ticket permits the server device to cause the second TLS communication session to be resumed.

13. The method of claim 12, wherein causing the first TLS communication session to be resumed and sending the second session ticket permits the client device and the server device to communicate, via the system, using the first TLS communication session and the second TLS communication session.

14. The method of claim 12 or 13, further comprising:
sending, to the server device and via the second TLS communication session, first traffic received from the client device via the first TLS communication session; and
sending, to the client device and via the first TLS communication session, second traffic received from the server device via the second TLS communication session.

15. The method of claim 12, 13 or 14, further comprising:
communicating, with another client device, to establish a third TLS communication session between the system and the other client device;
communicating, with another server device, to establish a fourth TLS communication session between the system and the other server device;
generating, based on establishment of the third TLS communication session, a third session ticket associated with the third TLS communication session;
obtaining, from the other server device and via the fourth TLS communication session, a fourth session ticket associated with the fourth TLS communication session; and
sending, to the other client device and via the third TLS communication session, the third session ticket, with the fourth session ticket included in the third session ticket;
and, for example, further comprising: receiving, from the other client device and after each of the third TLS communication session and the fourth TLS communication session terminate, the third session ticket that includes the fourth session ticket; causing, based on the third session ticket, the third TLS communication session to be resumed; and sending, to the other server device and based on causing the third TLS communication session to be resumed, the fourth session ticket, wherein sending the fourth session ticket permits the server device to cause the fourth TLS communication session to be resumed.
